# EUROPÄISCHE PATENTSCHRIFT

(11) **EP 2 780 212 B1**
(45) Veröffentlichungstag und Bekanntmachung des Hinweises auf die Patenterteilung: **29.06.2016**
(21) Anmeldenummer: 12772283.3
(22) Anmeldetag: 04.10.2012
(51) Int. Cl.: B62D 15/02, B60Q 9/00

(54) **GEDÄCHTNISBEHAFTETES MANÖVRIERASSISTENZSYSTEM**
MANOEUVRING ASSISTANCE SYSTEM HAVING MEMORY FUNCTION
SYSTÈME D'AIDE AUX MAN UVRES DOUÉ DE MÉMOIRE

(30) Priorität: 16.11.2011 DE 102011086433
(43) Veröffentlichungstag der Anmeldung: 24.09.2014
(73) Patentinhaber: Robert Bosch GmbH, 70442 Stuttgart (DE)
(72) Erfinder: LEHNER, Philipp, 74372 Sersheim (DE); SCHUMANN, Michael, 70597 Stuttgart (DE); NIEMZ, Volker, 71277 Rutesheim (DE); KANTER, Pascal, 71272 Renningen (DE)
(86) Internationale Anmeldenummer: PCT/EP2012/069572
(87) Internationale Veröffentlichungsnummer: WO 2013/072130

(56) Entgegenhaltungen:
- EP-A1- 1 777 144
- DE-A1-102007 036 251
- DE-A1-102008 003 662
- DE-A1-102009 028 760

## Beschreibung

### Stand der Technik

Die Erfindung betrifft Verfahren in einem Manövrierassistenzsystem eines Fahrzeugs, wobei insbesondere von einer Umfeldsensorik erfasste Umfelddaten permanent gespeichert werden, sowie ein entsprechendes Manövrierassistenzsystem.

Manövrierassistenzsysteme dienen der Unterstützung des Fahrers durch Bereitstellung aktiver oder passiver Manövrierhilfen. Derartige Systeme umfassen beispielsweise Parkhilfesysteme zum assistierten Ein- und/oder Ausparken. Zu den jeweils verfügbaren Assistenzfunktionen gehören auch die Ausgabe von Warnmeldungen, um den Fahrer beispielsweise vor einer Kollision mit einem von der Sensorik erfassten Objekt im Umfeld des Fahrzeugs zu warnen.

Es sind auch bereits Systeme bekannt, bei denen eine Umfeldsensorik ein Fahrzeugumfeld erfasst, und entsprechende Umfelddaten gespeichert werden, beispielsweise in Form einer Umfeld- bzw. Umgebungskarte. Bleiben diese Daten zumindest für einen gewissen Zeitraum gespeichert, können in einer solchen Karte auch detektierte Strukturen, erkannte Objekte bzw. potentielle Hindernisse, etc. berücksichtigt werden, die sich aufgrund der Bewegung des Fahrzeugs (oder aufgrund eigener Bewegung) aus einem Erfassungsbereich der Sensorik herausbewegt haben und sich daher momentan in einem 'blinden Fleck' (bezogen auf die Sensorik) befinden.

Aus der DE 10 2009 028 760 A1 ist ein Verfahren zur Prüfung der Umgebung eines Kraftfahrzeugs bekannt. Dabei wird die Umgebung des Fahrzeugs vor Beginn und während eines Einparkvorgangs erfasst. Die erfassten Daten werden gespeichert und stehen beim Ausparken des Fahrzeugs somit zur Verfügung. Bei einem Neustart des Fahrzeugs werden die gespeicherten Daten auf Plausibilität geprüft, indem die gespeicherten Daten mit aktuellen Messdaten verglichen werden. Damit wird erkannt, ob sich während der Parkdauer etwas im Umfeld des Fahrzeugs geändert hat und geänderte Objektabstände können beim Ausparken berücksichtigt werden.

Hierzu ist aus der DE 10 2008 036 009 A1 ein Verfahren zum Kollisionsschutz eines Fahrzeugs im Park- und Rangierbereich bekannt, wobei das Fahrzeug eine Umfeldsensorik zur Detektion von Umfeldobjekten im Umfeld des Fahrzeugs aufweist. Ein entsprechender Assistent kann Ultraschallsensoren sowie einen Laserscanner und/oder eine Kamera aufweisen. Bei dem Verfahren wird basierend auf Sensorinformationen der Umfeldsensorik eine Umfeldkarte erstellt und eine Kollisionswahrscheinlichkeit des Fahrzeugs mit in der Umgebung des Fahrzeugs befindlichen, in der Umfeldkarte abgebildeten Umfeldobjekten bestimmt. Die Umfeldkarte ist gedächtnisbehaftet, so dass auch für die von der Umfeldsensorik aktuell nicht erfassten, aber in der Umfeldkarte befindlichen Objekte eine Kollisionswahrscheinlichkeit bestimmt werden kann.

Die DE 10 2007 030 770 A1 beschreibt eine Rangierhilfevorrichtung für ein Fahrzeug mit einer Anzahl von Sensoren, insbesondere Radar- und Ultraschallsensoren, zur Erfassung von Hindernissen in der Umgebung des Fahrzeugs. Ein nichtflüchtiger Datenspeicher ist vorgesehen, der dafür eingerichtet ist, die letzten Positionen der erfassten Hindernisse permanent zu speichern, wenn das Fahrzeug geparkt und abgestellt wird. Eine Datenverarbeitungseinrichtung ist dafür eingerichtet, die gespeicherten letzten Positionen der früher erfassten Hindernisse bei einem Start des geparkten und abgestellten Fahrzeugs aus dem nicht-flüchtigen Datenspeicher auszulesen und für eventuell erforderliche Kollisionswarnungen zu verwenden. Der nichtflüchtige Datenspeicher stellt das Gedächtnis des Systems dar, das Informationen insbesondere zu Hindernissen enthält, die sich im geparkten Zustand nicht im Erfassungsbereich der Sensoren befinden, diese Informationen bis zum nächsten Start des Fahrzeugs bewahrt, und sodann Hilfe beim Ausparken leisten kann. Es werden Evidenzhistogramme als Umgebungskarten verwendet.

Der nächstliegende Stand der Technik ist in der DE102009028760 A1 zu sehen.

### Offenbarung der Erfindung

Der Erfindung liegt die Aufgabe zugrunde, ein verbessertes Manövrierassistenzsystem sowie Verfahren hierfür mit erhöhter Zuverlässigkeit und Verfügbarkeit, und/oder erweitertem Anwendungsbereich vorzuschlagen.

Erfindungsgemäß wird ein Verfahren in einem Manövrierassistenzsystem eines Fahrzeugs vorgeschlagen. Eine Umfeldsensorik erfasst ein Fahrzeugumfeld während einer Bewegung des Fahrzeugs. Umfelddaten, welche das erfasste Umfeld repräsentieren, werden derart gespeichert, dass sie bei einem erneuten Start des Systems verfügbar sind. Die gespeicherten Umfelddaten betreffen ein sichtbares Umfeld, das sich momentan im Erfassungsbereich der Umfeldsensorik befindet, und betreffen ein blindes Umfeld (einen "blinden Fleck"), das sich momentan aufgrund der Bewegung des Fahrzeugs nicht mehr im Erfassungsbereich der Umfeldsensorik befindet. Das Verfahren umfasst bei einem Start des Systems die folgenden Schritte: erneutes Erfassen des Fahrzeugumfeldes mit der Umfeldsensorik; Abgleich des momentan sichtbaren Umfelds mit vor dem Start gespeicherten Umfelddaten zum sichtbaren Umfeld; und selektives Ausgeben einer Warnung basierend auf dem Abgleich und auf vor dem Start gespeicherten Umfelddaten zum blinden Umfeld.

Die Ausgabe kann alternativ oder zusätzlich zu einer Warnung, bspw. einer Kollisionswarnung, auch die Ausgabe eines Hinweises, einer Angabe, etc. umfassen. Bspw. kann statt oder zusätzlich zu einer akustischen Kollisionswarnung eine Anzeige eines in einem blinden Fleck (blinden Winkel) vermuteten Objekts, einer Struktur, etc., auf einem Display oder dgl. Anzeigeeinrichtung erfolgen.

Die Umfeldsensorik kann beispielsweise eine Ultraschallsystem und/oder ein Videosystem umfassen. Die Umfeldsensorik kann aber zusätzlich oder alternativ auch weitere oder andere Systeme umfassen, beispielsweise ein Radarsystem, Lidarsystem, Laser(scanner)system, etc.

Das blinde Umfeld, d.h. ein außerhalb des Erfassungsbereiches der Sensorik liegender Bereich, kann beispielsweise einen oder mehrere Bereiche seitlich des Fahrzeugs umfassen. Derartige Bereiche werden häufig weder von Ultraschallsensoren (mit Einbauorten etwa in der vorderen und/oder hinteren Stoßstange), noch von einer Front- oder Heckkamera (Rückfahrkamera) erfasst. Beim Fehlen von Sensoren mit rückwärtigem Erfassungsbereich können sich aber auch hinter dem Heck des Fahrzeugs einer oder mehrere blinde Flecken befinden.

Die Umfelddaten können beispielsweise kartenbasiert repräsentiert werden, etwa in Form einer Umgebungs- bzw. Umfeldkarte. Die Karte kann ein Umfeld des Fahrzeugs beispielsweise fahrzeugfest und/oder raumfest repräsentieren. Die Speicherung der Umfelddaten kann beispielsweise zyklisch erfolgen, so dass in einem permanenten bzw. nichtflüchtigen Speicher in der Regel die letzten für einen Raumbereich verfügbaren (d.h. die aktuellsten) Umfelddaten repräsentiert sind. Wird eine Struktur von der Umfeldsensorik erfasst, wird diese in der Karte repräsentiert. Wandert eine erfasste Struktur, ein Objekt, Hindernis, etc. aus einem Erfassungsbereich der Umfeldsensorik - d.h. aus einem sichtbaren Bereich - in einen nicht von der Umfeldsensorik erfassten Umfeldbereich - d.h. in einen blinden Fleck bzw. ein blindes Umfeld - kann die Struktur dennoch weiter mit ihrer vermuteten Position in der Karte geführt werden. Die vermutete Position kann z. B. basierend auf einer Erfassung einer Eigenbewegung des Fahrzeugs berechnet werden.

Dem Start des Systems wird i.d.R. ein Beenden des Systems vorausgehen. Das Manövrierassistenzsystem kann beispielsweise im Zusammenhang mit einem Parken, Abstellen oder Halten des Fahrzeugs stehen, etwa einem vorübergehenden oder länger dauerndem Halten / Anhalten des Fahrzeugs auf einem Parkplatz, einem Parkhaus, etc., aber auch beispielsweise einem Anhalten in stockendem Verkehr, vor einer Ampel, Schranke, etc. Das Beenden des Systems kann durch einen Stillstand des Fahrzeugs, ein Ausschalten des Motors und/oder anderer Fahrzeugkomponenten getriggert werden.

Entsprechend kann der Start des Systems durch eine (Wieder-)Inbetriebnahme des Fahrzeugs oder Komponenten hiervon ausgelöst werden, etwa einem Einsteigen des Fahrers, (Wieder-)Anlassen des Motors, einem Losfahren nach einem länger oder kürzer dauerenden Halt, etc. Beispielsweise kann der Motor nach einem Halt vor einer Schranke, Ampel, im Stau, etc. wieder angelassen werden.

Der Abgleich des momentan erfassten sichtbaren Umfeldes nach dem Start mit dem gespeicherten sichtbaren Umfeld kann beispielsweise einen Abgleich von Ultraschalldaten umfassen, die erfasste Strukturen und/oder erkannte Hindernisse betreffen, beispielsweise Erhebungen im Umfeld wie erhabene Fahrbahnbegrenzungen, Parkflächenbegrenzungen, oder allgemein im Ultraschallbereich sichtbare Hindernisse. Zusätzlich oder alternativ kann der Abgleich einen Abgleich von Videodaten umfassen, beispielsweise Farben, Flächen mit gemeinsamen Eigenschaften wie Texturen, Kanten, Strukturen, bis hin zu Objekten, die durch eine auf den Videodaten basierende Verarbeitung erkannt werden.

Erfindungsgemäß umfasst der Abgleich des vor dem Start (z.B. mit einem Beenden) gespeicherten und des nach dem Start sichtbaren Umfelds eine Plausibilitätsprüfung, für die weitere Plausibilisierungsdaten herangezogen werden. Eine solche Prüfung kann die gespeicherten Umfelddaten nutzen, oder kann unabhängig davon ablaufen. Die Plausibilisierung kann im Zusammenhang mit weiteren Kriterien in eine Entscheidung zur Ausgabe einer Warnung basierend auf dem Abgleich eingehen.

Die Plausibilisierungsdaten umfassen erfindungsgemäß Angaben zu einem zeitlichen Abstand zwischen Umfeldszenario wie gespeichert und dem momentan erfassten sichtbaren Umfeld. Eine darauf basierende Plausibilitätsprüfung kann etwa dann, wenn der zeitliche Abstand (also etwa eine Halte- oder Parkdauer) einen vorgegebenen Schwellenwert überschreitet, dazu führen, dass ein Abgleich nicht mehr durchgeführt wird bzw. die Ausgabe einer Warnung unterdrückt wird. Weitere Plausibilisierungsdaten können etwa Angaben zur Tageszeit umfassen. Hierdurch kann etwa dann, wenn sich das gespeicherte und das momentan erfasste sichtbare Umfeld in der Farbgebung unterscheiden, plausibilisiert werden; so kann etwa ein Abstellen des Fahrzeugs bei Tag und ein Anlassen des Fahrzeugs bei Nacht erfolgen, was sich u.U. in der Farbgebung einer ansonsten unveränderten Szenerie auswirkt. Die Plausibilitätsprüfung könnte ergeben, dass bei einem durchgeführten Abgleich zumindest bestimmte Farbveränderungen nicht berücksichtigt werden

Die Plausibilisierungsdaten können Angaben zu einer Lokalisierung des Fahrzeugs umfassen. Beispielsweise können GPS("Global Positioning System") -Daten verwendet werden, um ergänzende Informationen darüber zu erlangen, ob das Fahrzeug zwischen dem Zeitpunkt, zu dem das gespeicherte Umfeld erfasst wurde, und dem momentanen Zeitpunkt bewegt wurde. Die Verwendung entsprechender GPS-Informationen kann vor einem Abgleich des gespeicherten und des momentan erfassten Umfeldes erfolgen, um zu entscheiden, ob ein derartiger Vergleich überhaupt durchgeführt werden sollte. Zumindest kann die Ausgabe einer Warnung ggf. unterdrückt werden. Hat sich die Ortsinformation zwischenzeitlich geändert, weil das Fahrzeug beispielsweise in einer automatischen Parkanlage bewegt wurde, ist das Ausgeben einer Warnung nicht sinnvoll.

Die Plausibilisierungsdaten können Angaben zu einer Fahrtrichtung des Fahrzeugs umfassen, bspw. basierend auf einem eingelegten Gang nach dem Start des Systems. Dies ermöglicht es, dass nur Informationen über solche Strukturen im blinden Umfeld zur Ausgabe einer Warnung führen, die sich in oder nahe bei dem tatsächlichen Fahrschlauch befinden.

Die Plausibilitätsprüfung stellt erfindungsgemäß fest, ob permanente Strukturen im blinden Umfeld vorliegen. Dies setzt voraus, dass die Permanenz detektierter Strukturen erkannt wird, so lange diese Strukturen sich noch im Erfassungsbereich der Sensorik befinden. Zu diesem Zeitpunkt können erkannte Objekte wie beispielsweise Zäune, Poller, und andere permanente Fahrbahn- bzw. Parkplatzbegrenzungen, Wände, Brüstungen und andere Gebäudeteile als permanente Strukturen identifiziert werden, bspw. anhand entsprechender Auswertung von Videodaten. Derartige Strukturen werden, sofern es sich bei ihnen um potentielle Hindernisse handelt, als hoch relevant eingeschätzt. Befinden sich derartige, relevante Objekte beim Starten des Systems im blinden Winkel, kann ihr vermutetes Vorhandensein (nach einem positiven Abgleich des sichtbaren Umfeldes) durch Ausgabe einer entsprechenden Warnung dem Fahrer angezeigt werden.

Auch andere erkannte Objekte, wie beispielsweise geparkte Fahrzeuge, werden in diesem Sinne als permanente Strukturen gekennzeichnet. Im Gegensatz hierzu werden beispielsweise Passanten, sich bewegende Fahrräder, und generell sich bewegende Objekte bei der Speicherung nicht als permanent klassifiziert. Derartige Objekte, selbst wenn sie unmittelbar vor Beenden des Systems als im blinden Umfeld befindlich gespeichert wurden, führen daher auch bei positivem Abgleich nicht zur Ausgabe einer Kollisionswarnung. Generell sind Strukturen, bspw. Objekte, die sich unmittelbar vor dem Beenden bzw. Herunterfahren des Systems noch bewegt haben, mit einiger Wahrscheinlichkeit keine permanenten Objekte, vor denen beim Wiederhochfahren des Systems zu warnen wäre.

Die Plausibilitätsprüfung kann auf Information aufsetzen, die erst unmittelbar vor einem Losfahren des Fahrzeugs zur Verfügung stehen, wie beispielsweise eine Information, die das Einlegen eines Gangs betrifft, um so die intendierte Fahrtrichtung zu erfassen. Der Abgleich des gespeicherten mit dem neu erfassten sichtbaren Umfeld kann unabhängig davon durchgeführt werden, also auch schon vorher durchgeführt werden, beispielsweise beim Starten des Fahrzeugs; jedoch kann die tatsächliche Ausgabe einer Warnung verzögert werden, bis die oder alle Plausibilitätsprüfungen abgeschlossen ist/sind. Generell kann eine Plausibilitätsprüfung vor und/oder nach dem Abgleich (oder parallel dazu) durchgeführt werden.

Generell kann sich die Plausibilitätsprüfung darauf beziehen, ob überhaupt ein Abgleich durchgeführt werden sollte (z. B. nicht bei zwischenzeitlicher Ortsveränderung). Zusätzlich oder alternativ kann sich die Plausibilitätsprüfung darauf beziehen, ob eine Warnung bezüglich eines gespeicherten Objekts ausgegeben werden soll, das sich potentiell im blinden Umfeld befindet, selbst wenn der Abgleich positives Ergebnis bringt, d.h. auf Übereinstimmung zwischen dem gespeicherten und dem momentan erfassten sichtbaren Umfeld entschieden wird. Hierbei kann die Plausibilitätsprüfung auf die Berechnung einer Wahrscheinlichkeit abstellen, dass sich das Objekt zum Startzeitpunkt noch im blinden Fleck befindet. Für eine derartige Prüfung können ggf. mehrere Informationen herangezogen werden, und/oder eine Prüfung kann mehrstufig und/oder als Verknüpfung mehrerer Teilprüfungen durchgeführt werden. So könnte eine Prüfung bspw. auf einer Auswertung von Informationen über das Vorhandensein und die Art (Permanenz) von Objekten in blinden Winkeln abstellen, außerdem auf eine Park- bzw. Haltezeit, eine potentielle Gefährdungsintensität durch das Objekt (Nähe zum voraussichtlichen Fahrschlauch).

Wahrscheinlichkeitswerte für die Permanenz von möglicherweise im blinden Umfeld befindliche Objekten können beispielsweise auch aus der Einbeziehung weiterer Umfeldinformationen generiert werden, bspw. können GPS-Informationen herangezogen werden. Aus der Erkennung, ob sich das Fahrzeug in einem Parkhaus oder auf einem Parkplatz befindet, ergibt sich, dass hier eher mit permanenten Objekten zu rechnen ist, wie Gebäudeteilen und/oder anderen geparkten Fahrzeugen. Parkt das Fahrzeug an einer Straße, in einer Parkbucht, oder dgl., ist etwa seitlich neben dem Fahrzeug das Vorhandensein permanenter Objekte unwahrscheinlich.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei der Computereinrichtung kann es sich beispielsweise um ein Modul zur Implementierung eines Manövrierassistenzsystems, wie beispielsweise eines Fahrassistenzsystems, Parkassistenten, etc. in einem Fahrzeug handeln, das beispielsweise auf einer Hardware-Einheit wie einer ECU ("Electronic Control Unit") implementiert sein kann.

Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-ROM, DVD oder einem USB-Stick. Zusätzlich oder alternativ kann das Computerprogramm auf einer Computereinrichtung wie etwa einem Server zum Herunterladen bereitgestellt werden, z. B. über ein Datennetzwerk wie das Internet oder eine Kommunikationsverbindung wie etwa eine Telefonleitung oder eine drahtlose Verbindung.

Erfindungsgemäß wird weiterhin ein Manövrierassistenzsystem für ein Fahrzeug vorgeschlagen, das eine Umfeldsensorik zur Erfassung eines Fahrzeugumfelds während einer Bewegung des Fahrzeugs umfasst. Das System umfasst weiterhin einen Speicher, beispielsweise einen permanenten oder nichtflüchtigen Speicherbereich eines entsprechenden Speicherbausteins oder einer Speicherkomponente, zum Speichern das erfasste Umfeld repräsentierender Umfelddaten, derart, dass sie bei einem erneuten Start des Systems verfügbar sind. Die gespeicherten Umfelddaten können Folgendes betreffen: ein sichtbares Umfeld, das sich momentan im Erfassungsbereich der Umfeldsensorik befindet, und ein blindes Umfeld, das sich momentan aufgrund der Bewegung des Fahrzeugs nicht mehr im Erfassungsbereich der Umfeldsensorik befindet. Das System umfasst weiterhin die folgenden Komponenten: eine Komponente zum Abgleich eines momentan sichtbaren Umfeldes bei einem Start des Systems, bei dem das Fahrzeugumfeld mit der Umfeldsensorik erneut erfasst wird, mit vor dem Start gespeicherten Umfelddaten zum sichtbaren Umfeld; und eine Komponente zum selektiven Ausgeben einer Warnung basierend auf dem Abgleich und vor dem Start gespeicherten Umfelddaten zum blinden Umfeld.

### Vorteile der Erfindung

Gedächtnisbehaftete Manövrierassistenzsysteme mit bspw. einer Umfeldkarte bieten u.a. die Möglichkeit, vor einer Kollision mit einem Objekt zu warnen, obwohl sich dieses gegenwärtig im blinden Fleck der Umfeldsensorik des Fahrzeugs befindet. Solche Warnungen können auch über einen Haltevorgang bzw. ein Abstellen des Fahrzeugs zum Parken, etc. hinweg erfolgen. Verbesserungen bei der Ausgabe von Warnungen zu Objekten im blinden Fleck beim Ausparken, etc. - und zwar auch schon dann, wenn diese blinden Flecken noch nicht mit der Bewegung des Fahrzeugs geklärt worden sind - sind von großer Bedeutung, beispielsweise für die Vermeidung seitlicher Kollisionen, wobei gerade seitliche Bereiche häufig weder von der Umfeldsensorik noch vom Fahrer günstig eingesehen werden können. Erfindungsgemäß wird das Verhalten derartiger Systems dadurch entscheidend weiter verbessert, dass nach dem erneuten Start des Systems, z.B. beim Anlassen des Wagens, das zu diesem Zeitpunkt für die Umfeldsensorik sichtbare Umfeld des Fahrzeugs mit dem vor dem Beenden des Systems, z.B. beim Ausschalten des Motors, erfassten und gespeicherten sichtbaren Umfeld verglichen wird. Liegt eine Übereinstimmung vor (etwa mit einer Wahrscheinlichkeit, die oberhalb eines vordefinierten Schwellenwertes liegt), kann entsprechend davon ausgegangen werden, dass Objekte, die sich momentan nicht im Erfassungsbereich befinden, aber vor dem Beenden des Systems in der Bewegung des Fahrzeugs vermessen wurden, sich mit einiger Wahrscheinlichkeit noch immer im blinden Umfeld befinden. Dieser Ansatz eröffnet die Möglichkeit, je nach Art und Umfang der Daten, die hierbei berücksichtigt werden, mit entsprechender Zuverlässigkeit zu entscheiden, ob in Bezug auf das oder die Objekte im blinden Umfeld eine Warnung an den Fahrer auszugeben ist.

Das vorgeschlagene System ermöglicht also eine erhöhte Zuverlässigkeit gegenüber bekannten Systemen. Insbesondere kann die Anzahl von Fehlalarmen verringert werden, beispielsweise durch eine evidenzbasierte Ausgestaltung des Systems. Hierbei kann einerseits die Zahl der Alarme minimiert werden, bei denen vor einem Objekt im blinden Fleck gewarnt wird, obwohl dieses sich dort gar nicht mehr befindet. Andererseits kann auch die Zahl der Alarme minimiert werden, die nicht ausgelöst werden, obwohl ein an sich vorher von der Sensorik erfasstes Objekt sich noch immer im blinden Fleck befindet.

Erfindungsgemäß kann der Abgleich der gespeicherten sichtbaren Umgebung mit der neu erfassten, sichtbaren Umgebung einfacher oder komplexer ausgeführt werden. Beispielsweise kann sich eine eher komplexere Erfassung, die sich wohl insbesondere auf Videodaten stützen würde, insbesondere auf die Erkennung von permanenten Strukturen konzentrieren, beispielsweise Fahrbahnmarkierungen oder Gebäudeteilen, um zuverlässig festzustellen, ob die Park- oder Haltsituation des Fahrzeugs dieselbe ist wie vor dem Herunterfahren des Systems. Komplexere Systeme können dann auch mit schwieriger zu entscheidenden Situationen umgehen; z.B. sollte die Erkennung, dass ein seitlich geparktes weiteres Fahrzeug gewechselt hat oder sich dort nunmehr eine freie Parklücke befindet, nicht in jedem Falle dazu führen, dass eine Warnung vor einem in einem blinden Fleck vermutetes Objekt unterdrückt wird, da sich beispielsweise ein Parkhauspfeiler noch immer an seinem Platz befinden wird.

War allerdings das Objekt, das sich vor dem Einparken, Halten, etc. in den blinden Fleck bewegt hat, ein Teil des Fahrzeugs, das beim Hochfahren des Systems aus dem sichtbaren Umfeld verschwunden ist, sollte entsprechend keine Warnung ausgegeben werden.

Diese Beispiele illustrieren das Potential der Erfindung. Beispielsweise kann ein erfindungsgemäß ausgerüstetes System zunächst mit einer einfachen Abgleichroutine eingeführt werden, und kann dann in sequentiellen Aktualisierungen oder mit hochpreisigeren Zusatzkomponenten in Richtung auf eine umfassende Auswertung des sichtbaren Umfelds zur Erzielung einer besonders hohen Zuverlässigkeit und damit Nützlichkeit und Akzeptanz für den Fahrer bewegen.

Werden zu häufige Fehlalarme vermieden, verbessert sich entsprechend der Nutzwert des Systems und seine Akzeptanz. Ein Warnsystem wird als robust und zuverlässig eingeschätzt, wenn es umgehend, d.h. eventuell bereits vor oder jedenfalls unmittelbar bei Beginn eines Ausparkvorgangs, Wiederanfahrens, etc. auch vor Objekten warnt, die sich im blinden Fleck befinden. Die Erfindung ermöglicht hierbei die Ausgabe einer Kollisionswarnung entweder unmittelbar beim Anlassen des Wagens, oder in Reaktion auf erste Fahrhandlungen des Fahrers wie beispielsweise Einlegen des Ganges, Einschlagen des Lenkrades, Betätigen des Gaspedals.

Die Erfindung kann auf einfache Weise in bestehende Manövrierassistenzsysteme, wie beispielsweise Parkassistenten, integriert werden. Zusätzliche Hardware dürfte dafür in der Regel nicht notwendig sein, es genügt ein Software-Update bei bestehenden Fahrzeugen bzw. eine entsprechende Integration in neue Systeme in Form von (Software-)Modulen etc. Es kann vorzugsweise auf bestehende Umfeldsensorik zurückgegriffen werden, so dass auch keine zusätzlichen Sensoren, zusätzliche Einbauorte, zusätzliche Verkabelung, etc. erforderlich sind. Darüber hinaus kann auch der Abgleich der Vorher- und Nachher-Szenarien (Umfeldsituationen) weitgehend auf bestehenden Routinen aufsetzen, beispielsweise einer existierenden Videoauswertung zur Objekterkennung, Strukturerkennung, Klassifizierung, etc.

Die Erfindung ermöglicht somit zuverlässige Warnungen bzw. Hinweise auf Objekte im blinden Fleck, ohne dass zusätzliche Sensoren zur Abdeckung dieser blinden Bereiche verbaut werden müssten. Dies ermöglicht kostengünstige und zuverlässige Systeme. Somit kann mit vergleichsweise geringem Hardware-/Implementierungsaufwand bei geringen Kosten insgesamt eine deutlich verbesserte Akzeptanz, z.B. verringerte Anfälligkeit für Fehlalarme erzielt werden.

### Kurze Beschreibung der Zeichnungen

Weitere Aspekte und Vorteile der Erfindung werden nunmehr anhand der beigefügten Figuren eingehender beschrieben. Hierbei zeigt:

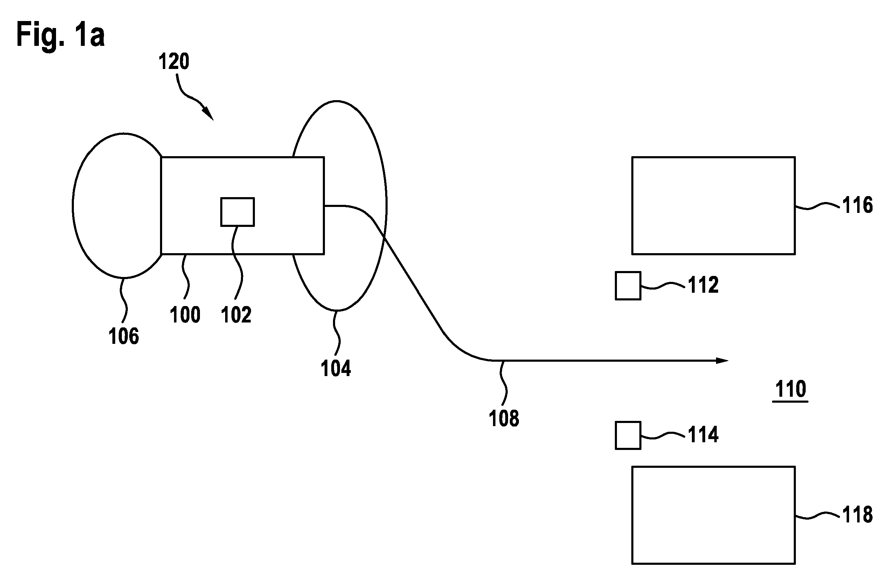

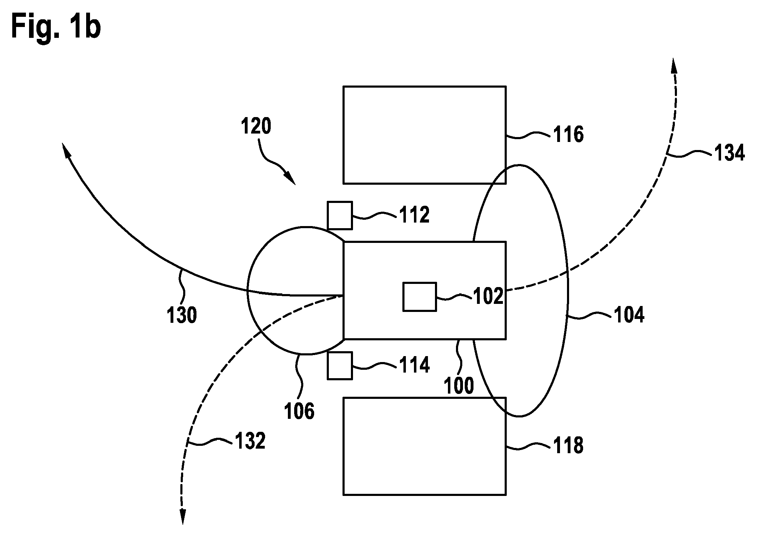

- Fig. 1 a: ein mit einem erfindungsgemäßen Manövrierassistenzsystem ausgerüstetes Fahrzeug in einer beispielhaften Einparksituation;
- Fig. 1 b: das Fahrzeug aus Fig. 1 a beim Ausparken;
- Fig. 2: eine schematische Darstellung funktionaler Komponenten des Fahrerassistenzsystems auf Fig. 1 a; und
- Fig. 3: in Form eines Flussdiagramms eine Arbeitsweise des Fahrerassistenzsystems aus Fig. 2.

### Ausführungsformen der Erfindung

In den Fign. 1 a und 1 b wird eine beispielhafte Ein- bzw. Ausparksituation illustriert, anhand derer die Erfindung nachfolgend weiter erläutert werden wird. Ein Fahrzeug 100 ist mit einem Manövrierassistenzsystem 102 ausgerüstet, beispielsweise in Form eines Parkassistenten. Das System 102 umfasst eine Umfeldsensorik mit einem Erfassungsbereich 104, der ein vorderes Umfeld des Fahrzeugs 100 abdeckt, sowie mit einem Erfassungsbereich 106, der ein rückwärtiges Umfeld des Fahrzeugs 100 abdeckt. Das Fahrzeug 100 bewegt sich in Fig. 1 a entlang einer Trajektorie 108 in eine Parklücke 110 zwischen zwei Parkhauspfeilern 112, 114 (hierbei kann es sich auch um andere permanente Objekte handeln). In benachbarten Parklücken befinden sich weitere parkende Fahrzeuge 116, 118.

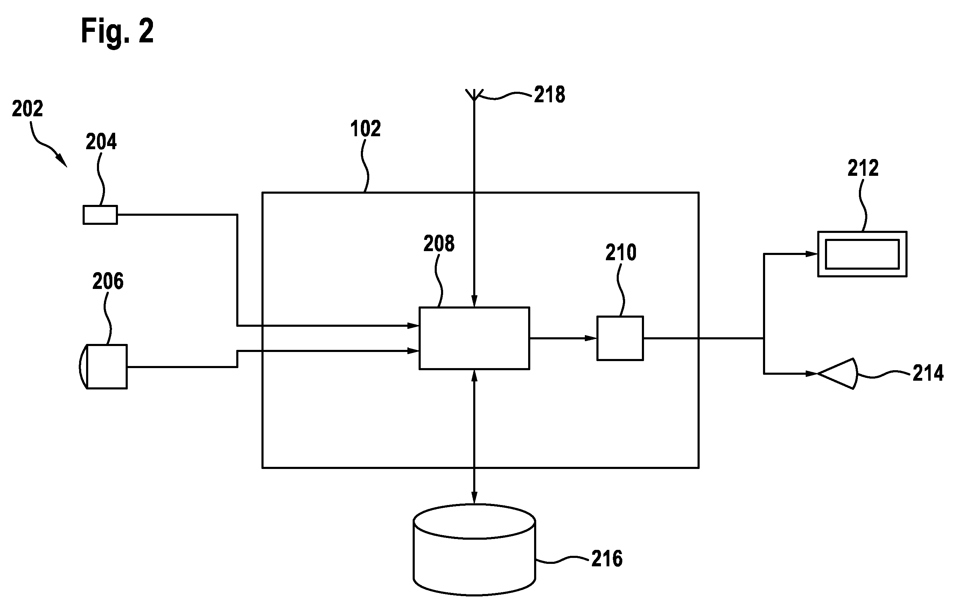

Fig. 2 illustriert in schematischer Form funktionale Komponenten des Manövrierassistenzsystems 102 aus Fig. 1 a. Das System 102 umfasst eine Umfeldsensorik 202 mit einem lediglich schematisch dargestellten Ultraschallsystem 204 sowie einem Videosystem 206. Das Ultraschallsystem 204 kann beispielsweise einen oder mehrere Ultraschallsensoren umfassen, die sich an Einbauorten in einem vorderen Bereich des Fahrzeugs 100 und/oder an Einbauorten in einem rückwärtigen bzw. Heckbereich des Fahrzeugs 100 befinden. Das Videosystem 206 kann beispielsweise eine Frontkamera und/oder eine Rückfahrkamera umfassen. Die in den Figuren 1 a / 1b schematisch angedeuteten Erfassungsbereiche 104, 106 der Sensorik 202 können sich aus sich überlagernden und/oder ergänzenden Erfassungsbereichen der einzelnen Sensoren innerhalb und zwischen den Subsystemen 204 und 206 ergeben.

Das Manövrierassistenzsystem 102 in Fig. 2 umfasst weiterhin eine Abgleichkomponente 208 sowie eine Ausgabekomponente 210. Dem Manövrierassistenzsystem 102 sind Ausgabekomponenten wie eine Anzeigekomponente (z. B. ein Display) 212 sowie eine akustische Ausgabekomponente 214 (z. B. ein Lautsprecher) zugeordnet.

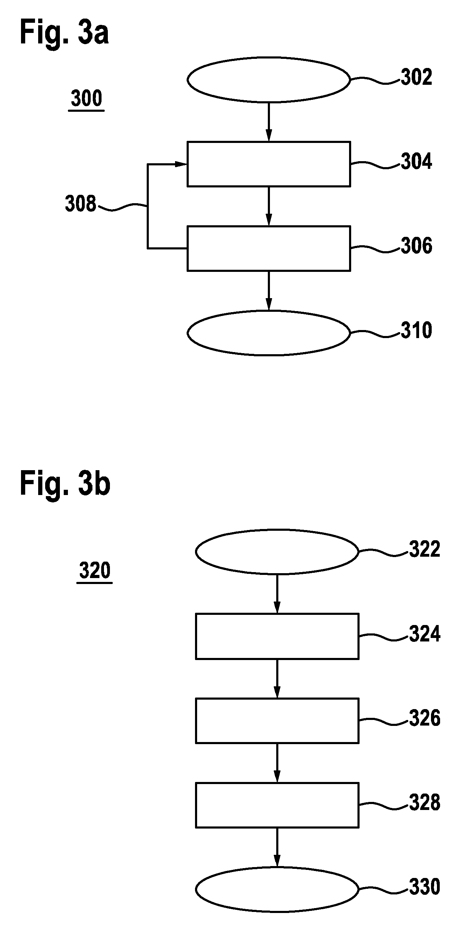

Eine erste Betriebsweise 300 des Manövrierassistenzsystems 102 während des in Fig. 1 a illustrierten Einparkens wird nunmehr anhand des Flussdiagramms in Fig. 3a beschrieben (302). In Schritt 304 erfasst die Umfeldsensorik 202 das Fahrzeugumfeld 104 und 106 während der Bewegung des Fahrzeugs 100 entlang der Trajektorie 108 in die Parklücke 110. In Schritt 306 werden das erfasste Umfeld repräsendierende Umfelddaten in einem dem Manövrierassistenzsystem 102 zugeordneten Speicher 216 gespeichert. Insbesondere wird im Speicher 216 eine Umfeldkarte gehalten bzw. gepflegt, die von der Sensorik 202 erfasste Strukturen, erkannte Objekte, etc. im Umfeld des Fahrzeugs 100 repräsentiert. Die Karte kann beispielsweise detektierte Objekte in Form eines raumfesten und/oder eines fahrzeugfesten Koordinatensystems repräsentieren.

Bei der Bewegung des Fahrzeugs 100 entlang der Trajektorie 108 gelangen die Objekte 112, 114, sowie auch die benachbarten Fahrzeuge 116, 118 in den Erfassungsbereich 104. Die Objekte befinden sich somit im sichtbaren Umfeld der Sensorik 202 und werden als solche in der Umgebungskarte repräsentiert. Allerdings verlassen beide Objekte 112, 114 den Erfassungsbereich 104, wenn das Fahrzeug 100 in die Parklücke 110 einfährt. Wenn das Fahrzeug in einer Reihe mit den Fahrzeugen 116, 118 zum Stehen kommt, haben sich die Objekte 112, 114 noch nicht in den Erfassungsbereich 106 hineinbewegt, sondern bleiben im blinden Umfeld bzw. Fleck (Winkel) 120. In der im Speicherbereich 216 abgelegten Umfeldkarte werden jedoch auch Strukturen, z.B. Objekte, gepflegt, die im blinden Umfeld 120 vermutet werden. Insbesondere werden Objekte repräsentiert, die sich aus den Erfassungsbereichen 104, 106 beispielsweise durch die Bewegung des Fahrzeugs 100 in die blinden Winkel 120 hinein verlagert haben.

Wie in Fig. 3a durch den Pfeil 308 veranschaulicht, kann die Reihenfolge der Schritte 304 und 306 zyklisch durchlaufen werden. Im Resultat sind in der Karte im Speicher 216 jeweils die aktuellsten Umfelddaten (wie von der Umfeldsensorik geliefert) betreffend das sichtbare Umfeld bzw. den Erfassungsbereich 104, 106 der Sensorik 202 abgelegt. Ferner sind die vermuteten Positionen von Strukturen, z.B. Objekten, die sich aus den Erfassungsbereichen 104, 106 heraus beispielsweise in die blinden Winkel 120 bewegt haben. Die vermuteten Positionen der Objekte können anhand der Bewegung des Fahrzeugs 100 beispielsweise basierend auf Radsensoren, Lenkwinkelsensoren, oder auch GPS-Informationen eines GPS-Sensors 218 berechnet werden.

In Schritt 310 endet das Verfahren 300, d.h. das System 102 wird heruntergefahren, beispielsweise weil das Fahrzeug, in der Parklücke 110 angekommen, abgestellt wird. Das Herunterfahren des Systems 102 kann beispielsweise durch das Ausschalten des Motors des Fahrzeugs 100 initiiert werden. Die zuletzt im Speicherbereich 216 abgelegte Umfeldkarte bleibt über das Beenden des Systems hinaus erhalten.

In Fig. 1b ist das Ausparken des Fahrzeugs 100 aus der Parklücke 110 schematisch dargestellt. Das Fahrzeug bewegt sich beispielsweise entlang der Trajektorie 130 aus der Parklücke 110 heraus. Hierauf bezugnehmend wird eine zweite Betriebsweise 320 des Manövrierassistenzsystems 102, die einen Start bzw. ein Hochfahren des Systems 102 beispielsweise beim Anlassen des Fahrzeugs 100 betrifft (322), anhand des Flussdiagramms in Fig. 3b beschrieben.

Bei einem Start des Systems 102 wird in Schritt 324 ein Fahrzeugumfeld (d.h. die Erfassungsbereiche 104, 106) um das Fahrzeug 100 herum mit der Umfeldsensorik 202 erneut erfasst. In Schritt 326 erfolgt der Abgleich des damit momentan, d.h. nach dem Neustart des Systems, sichtbaren Umfeldes mit den im Speicherbereich 216 abgelegten Umfelddaten, soweit sie das sichtbare Umfeld zum Zeitpunkt des Abstellens des Fahrzeugs 100 repräsentieren. Hierzu sei beispielhaft angenommen, dass das Fahrzeug 100 in der Parklücke 110 für einige Stunden abgestellt war und möglicherweise auch die daneben parkenden Fahrzeuge 116, 118 durch andere Fahrzeuge ersetzt wurden.

Weil das Fahrzeug zwischen den Zeitpunkten des Abstellens und des Anlassens des Motors nicht bewegt wurde, ist der Erfassungsbereich 104, 106 der Umfeldsensorik 202 unverändert. Dieser Umstand wird in Schritt 326 von der Abgleichkomponente 208 detektiert, wie nachfolgend genauer beschrieben werden wird. Basierend auf der Feststellung eines (zumindest im wesentlichen) unveränderten Umfeldes während des Parkens greift die Komponente 208 auf die im Speicher 216 abgelegte Umfeldkarte zu, um Informationen über Objekte zu erhalten, die sich im blinden Winkel 120 befinden könnten. Hier finden sich Informationen über die Pfeiler 112, 114, die beim Einparken den Erfassungsbereich 104 der Umfeldsensorik durchquert hatten und entsprechend mit ihren vermuteten Positionen im blinden Winkel in der Umfeldkarte repräsentiert sind.

Die Objekte 112, 114 wurden bei ihrer Erfassung (beim Durchqueren des Erfassungsbereiches 104) als permanente Objekte erkannt und sind in der Karte im Speicher 216 mit einem dementsprechenden Attribut belegt. Daher geht die Komponente 208 davon aus, dass auch beim Wiederanlassen des Wagens und Herausführen aus der Parklücke 110 in der Situation der Fig. 1b die Objekte 112, 114 noch vorhanden sind. Aus diesem Grund wird die Ausgabekomponente 210 getriggert, um in Schritt 328 ein Warnung in Bezug auf wenigstens eines der Objekte 112, 114 auszugeben. Konkret wartet die Ausgabekomponente ab, bis bspw. durch Einschlagen des Lenkrades bzw. der Räder klar ist, dass das Fahrzeug der 130 folgen soll, und gibt dann eine Kollisionswarnung bzgl. des Pfeilers 112 aus. Würde das Fahrzeug durch einen andere Lenkradeinschlag der Trajektorie 132 folgen, würde die Komponente 210 eine Warnung bzgl. des Objekts 114 herausgeben. Würde das Fahrzeug beginnen, einer Trajektorie 134 zu folgen, würde keine Warnung herausgegeben, weil das Fahrzeug sich von der vermuteten Position der Objekte 112, 114 entfernt.

Bei den Warnungen kann es sich etwa um eine akustische Warnung, auszugeben auf den Lautsprecher 214, handeln, und/oder es kann eine optische Warnung auf den Schirm 212 ausgegeben werden, die beispielsweise die Umfeldkarte mitsamt den vermuteten Objekten 112, 114 wiedergibt.

In Schritt 330 endet das Verfahren 320. Beispielsweise kann der Verfahrensablauf 220 in den üblichen Verfahrensablauf 300 aus Fig. 3a übergehen, bei dem die Karte im Speicher 216 zyklisch aktualisiert wird. Jedoch können weiterhin Daten über Objekte wie die Pfeiler 112, 114, die aus der Erfassung vor dem Start des Systems (322) stammen, verwendet werden, bspw. bis die Objekte 112, 114 im Erfassungsbereich 106 auftauchen.

Der Abgleich des nach dem Hochfahren des Systems 102 erfassten Umfeldes (Ablauf 320 in Fig. 3b) mit dem sichtbaren Umfeld, wie in der Karte im Speicher 216 abgelegt, kann einen Vergleich der Ultraschalldaten der Sensoren 204 umfassen, beispielsweise ein Vergleich der Konturen und Abstände der Fahrzeuge 116, 118. Zusätzlich oder alternativ können Videodaten des Videosystems 206 ausgewertet werden. Ein einfacher Vergleich, der z. B. bevorzugt bei kurzer Park- bzw. Haltedauer durchgeführt werden könnte, kann etwa (nur) auf einen Vergleich der Farben von flächenhaften Strukturen wie den Karosserien der Fahrzeuge 116, 118 abzielen.

Ein komplexerer Abgleich, der beispielsweise nach längerer Parkdauer und/oder bei Nicht-Übereinstimmung der Farben durchgeführt werden könnte, kann auf die Ergebnisse einer Objekterkennung abzielen, bei denen beispielsweise festgestellt wird, dass es sich bei den Objekten 116, 118 um parkende Fahrzeuge handelt. Basierend auf einer derartigen Klassifizierung wäre es von geringerer Bedeutung, ob es sich bei den Objekten 116, 118, wie während des Einparkens und beim Ausparken detektiert, um dieselben oder andere Fahrzeuge handelt, da in einem Parkhaus oder auf einem Parkplatz mit einem Wechsel zu rechnen ist und ein valider Plausibilitätsalgorithmus dieses berücksichtigen könnte. Eine genauere Videoauswertung wäre auch eine Voraussetzung dafür, dass die Objekte 112, 114 im blinden Winkel 120 bei der Repräsentation im Speicher 216 als "permanente" Objekte klassifiziert werden. Werden die Pfeiler 112, 114 beispielsweise als Gebäudeteile, basierend auf ihrer Formgebung, Textur, Farbe, etc. klassifiziert, wäre damit gleichzeitig ihre Relevanz für mögliche Kollisionswarnungen beim Herausfahren aus der Parklücke 110 festgestellt.

Allgemein handelt es sich bei den vor dem Herunterfahren des Systems 102 in der Karte im Speicher 216 abgelegten Informationen über Objekte im blinden Winkel 120 um Wahrscheinlichkeitsinformationen, die bei bestimmten Ausführungsformen der Erfindung durch eine Plausibilitätsprüfung plausibilisiert werden. Hierzu zählt etwa eine Auswertung der bereits erwähnten Park- bzw. Haltedauer: Beispielsweise kann die Relevanz nicht-permanenter Objekte im blinden Bereich 120 mit zunehmender Zeitdauer geringer eingeschätzt werden, um auf diese Weise Fehlalarme zu vermeiden. Nachdem die Objekte 112, 114 in Fig. 1b als permanente Objekte klassifiziert sind, wäre die verstrichene Parkzeit hier allerdings als irrelevant einzustufen.

Beim Abgleich in Schritt 326 kann die Komponente 208 auch Daten des GPS-Sensors 218 heranziehen, um mit erhöhter Zuverlässigkeit feststellen zu können, ob sich das Fahrzeug nach wie vor am gleichen Ort befindet. Zusätzlich oder alternativ ermöglicht eine Lokalisierungsinformation vom GPS-Sensor 218 über vorgegebenes elektronisches Kartenmaterial die Berücksichtigung zusätzlicher Informationen zu dem Ort, an dem sich das Fahrzeug 100 befindet. Beispielsweise kann festgestellt werden, ob sich das Fahrzeug auf einem Parkplatz, in einer Parkbucht an einer belebten Straße, oder auf einer Fahrbahn einer Straße befindet. Dementsprechend können Rückschlüsse darauf gezogen werden, ob Objekte, die vor dem Herunterfahren des Systems im blinden Winkel 120 vermutet wurden, dort mit relevanter Wahrscheinlickeit immer noch befinden.

Das erfindungsgemäße System ermöglicht somit die Bereitstellung eines zuverlässigen Assistenten mit ausgeweitetem Anwendungsbereich in Bezug auf Warnungen bspw. vor seitlichen Kollisionen in Situationen, in denen das System mangels vorheriger Fahrzeugbewegung noch keine aktuellen Informationen über blinde Winkel außerhalb des Erfassungsbereiches der Sensoren hat.

Die Erfindung ist nicht auf die hier beschriebenen Ausführungsbeispiele und die darin hervorgehobenen Aspekte beschränkt; vielmehr sind innerhalb des durch die anhängenden Ansprüche angegebenen Bereichs eine Vielzahl von Abwandlungen möglich, die im Rahmen fachmännischen Handelns liegen.

## Patentansprüche

1. Verfahren in einem Manövrierassistenzsystem eines Fahrzeugs,
wobei eine Umfeldsensorik (202) ein Fahrzeugumfeld während einer Bewegung des Fahrzeugs (100) erfasst (304),
wobei das erfasste Umfeld repräsentierende Umfelddaten derart gespeichert werden (306), dass sie bei einem erneuten Start des Systems (102) verfügbar sind,
wobei die gespeicherten Umfelddaten folgendes betreffen:
- ein sichtbares Umfeld, das sich momentan im Erfassungsbereich (104, 106) der Umfeldsensorik (202) befindet, und
- ein blindes Umfeld (120), das sich momentan aufgrund der Bewegung des Fahrzeugs (100) nicht mehr im Erfassungsbereich der Umfeldsensorik (202) befindet,
wobei das Verfahren bei einem Start (322) des Systems (102) die folgenden Schritte umfasst:
- erneutes Erfassen (324) des Fahrzeugumfelds mit der Umfeldsensorik (202);
- Abgleich (326) des momentan sichtbaren Umfelds (104, 106) mit vor dem Start gespeicherten Umfelddaten zum sichtbaren Umfeld; und
- Selektives Ausgeben (328) einer Warnung basierend auf dem Abgleich und auf vor dem Start gespeicherten Umfelddaten zum blinden Umfeld (120),
**dadurch gekennzeichnet dass**
der Abgleich des vor und nach dem Start sichtbaren Umfeld eine Plausibilitätsprüfung umfasst, für die weitere Plausibilisierungsdaten herangezogen werden, und die Plausibilisierungsdaten Angaben zu einem zeitlichen Abstand zwischen dem Umfeld wie gespeichert und dem momentan erfassten Umfeld umfassen, und bei der Plausibilitätsprüfung permanente und nicht-permanente Objekte klassifiziert werden, wobei permanente Objekte für mögliche Kollisionswarnungen relevant sind, und die Relevanz nicht-permanenter Objekte im blinden Umfeld (120) mit zunehmender Zeitdauer geringer eingeschätzt wird.

2. Verfahren nach Anspruch 1,
wobei die Umfeldsensorik ein Ultraschallsystem (204) und/oder ein Videosystem (206) umfasst.

3. Verfahren nach Anspruch 2,
wobei der Abgleich einen Abgleich von Ultraschalldaten umfasst, die erfasste Strukturen (116, 118) und/oder Hindernisse betreffen.

4. Verfahren nach Anspruch 2 oder 3,
wobei der Abgleich einen Abgleich von Videodaten umfasst, die Farben, Kanten und/oder basierend auf den Videodaten erkannte Objekte (116, 118) betreffen.

5. Verfahren nach Anspruch 1,
wobei die Plausibilisierungsdaten Angaben zu einer Lokalisierung des Fahrzeugs umfassen.

6. Computerprogramm zur Durchführung des Verfahrens nach einem der vorhergehenden Ansprüche, wenn das Computerprogramm auf einer programmierbaren Computereinrichtung ausgeführt wird.

## Claims

1. Method in a manoeuvring assistance system of a vehicle,
an environment sensor system (202) recording (304) a vehicle environment during a movement of the vehicle (100),
environment data representing the recorded environment being stored (306) in such a manner that they are available when the system (102) is restarted,
the stored environment data relating to the following:
- a visible environment which is currently in the recording range (104, 106) of the environment sensor system (202), and
- a blind environment (120) which is currently no longer in the recording range of the environment sensor system (202) on account of the movement of the vehicle (100),
the method comprising the following steps when starting (322) the system (102):
- recording (324) the vehicle environment again using the environment sensor system (202);
- comparing (326) the currently visible environment (104, 106) with environment data relating to the visible environment which were stored before the start; and
- selectively outputting (328) a warning on the basis of the comparison and on the basis of environment data relating to the blind environment (120) which were stored before the start,
**characterized in that**
the comparison of the environment visible before and after the start comprises a plausibility check for which further plausibility data are used, and the plausibility data comprise details of an interval of time between the environment as stored and the currently recorded environment, and permanent and non-permanent objects are classified during the plausibility check, permanent objects being relevant to possible collision warnings, and the relevance of non-permanent objects in the blind environment (120) being given a lower estimation with increasing period of time.

2. Method according to Claim 1,
the environment sensor system comprising an ultrasound system (204) and/or a video system (206).

3. Method according to Claim 2,
the comparison comprising a comparison of ultrasound data relating to recorded structures (116, 118) and/or obstacles.

4. Method according to Claim 2 or 3,
the comparison comprising a comparison of video data relating to colours, edges and/or objects (116, 118) detected on the basis of the video data.

5. Method according to Claim 1,
the plausibility data comprising details of a location of the vehicle.

6. Computer program for carrying out the method according to one of the preceding claims when the computer program is executed on a programmable computer device.

## Revendications

1. Procédé, dans un système d'aide aux manoeuvres d'un véhicule,
dans lequel un système de capteurs d'environnement (202) détecte (304) un environnement du véhicule pendant un déplacement du véhicule (100),
dans lequel des données d'environnement représentant l'environnement détecté sont stockées (306) de manière à ce qu'elles puissent être mises à disposition lors d'un redémarrage du système (102),
dans lequel les données d'environnement stockées concernent les éléments suivants :
- un environnement visible qui se trouve à l'instant courant dans la région de détection (104, 106) du système de capteurs d'environnement (202), et
- un environnement invisible (120) qui ne se trouve plus à l'instant courant dans la région de détection du système de capteurs d'environnement (202) du fait du déplacement du véhicule (100),
dans lequel le procédé comprend, lors d'un démarrage (322) du système (102), les étapes consistant à :
- détecter à nouveau (324) l'environnement du véhicule à l'aide du système de capteurs d'environnement (202) ;
- aligner (326) l'environnement visible instantané (104, 106) à l'aide de données d'environnement stockées avant le démarrage sur l'environnement visible ; et
- fournir en sortie sélectivement (328) une alarme sur la base de l'alignement et de données d'environnement stockées avant le démarrage concernant l'environnement invisible (120),
**caractérisé en ce que** l'alignement de l'environnement visible avant et après le démarrage comprend un test de plausibilité pour lequel d'autres données de plausibilité sont utilisées, et les données de plausibilité comprennent des indications concernant un intervalle de temps entre l'environnement tel qu'il est stocké et l'environnement instantané détecté, le test de plausibilité consistant à classer des objets permanents et non permanents, dans lequel les objets permanents sont pertinents pour des alarmes de collision possibles et la pertinence d'objets non permanents est estimée comme étant plus faible dans l'environnement invisible (120) avec une durée croissante.

2. Procédé selon la revendication 1,
dans lequel le système de capteurs d'environnement comprend un système à ultrasons (204) et/ou un système vidéo (206).

3. Procédé selon la revendication 2,
dans lequel l'alignement comprend un alignement de données d'ultrasons qui concernent des structures (116, 118) et/ou des obstacles détectés.

4. Procédé selon la revendication 2 ou 3,
dans lequel l'alignement comprend un alignement de données vidéo qui concernent des couleurs, des bords, et/ou des objets (116, 118) reconnus sur la base des données vidéo.

5. Procédé selon la revendication 1,
dans lequel les données de plausibilité comprennent des indications concernant une localisation du véhicule.

6. Programme d'ordinateur destiné à mettre en oeuvre le procédé selon l'une quelconque des revendications précédentes lorsque le programme d'ordinateur est exécuté sur un dispositif informatique programmable.
